Europäisches Patentamt

European Patent Office

Office européen des brevets

(11) Numéro de publication: **0 410 870 A1**

## (12) DEMANDE DE BREVET EUROPEEN

(21) Numéro de dépôt: 90402126.8

(22) Date de dépôt: 24.07.90

(51) Int. Cl.⁵: **G01R 23/16, G01S 13/34**

(30) Priorité: 28.07.89 FR 8910187

(43) Date de publication de la demande:
30.01.91 Bulletin 91/05

(84) Etats contractants désignés:
DE FR GB IT

(71) Demandeur: TELECOMMUNICATIONS
RADIOELECTRIQUES ET TELEPHONIQUES
T.R.T.
88 rue Brillat Savarin
F-75640 Paris Cédex 13(FR)

(84) FR

Demandeur: N.V. Philips'
Gloeilampenfabrieken
Groenewoudseweg 1
NL-5621 BA Eindhoven(NL)

(84) DE

(72) Inventeur: Hethuin, Serge
Société Civile S.P.I.D., 156 Bd Haussmann
F-75008 Paris(FR)
Inventeur: Fauret,Jérôme
Société Civile S.P.I.D., 156 Bd Haussmann
F-75008 Paris(FR)

(74) Mandataire: Chaffraix, Jean et al
Société Civile S.P.I.D. 156, Boulevard
Haussmann
F-75008 Paris(FR)

(54) Dispositif d'analyse spectrale d'un signal numérique.

(57) Ce dispositif est composé de deux blocs (6) et (7), le premier calcule les coefficients d'un prédicteur soit par la méthode de Levinson soit par la méthode du gradient. Le second calcule le spectre soit à partir des coefficients du prédicteur soit en effectuant une transformée de Fourier sur les échantillons X(n).

FIG. 1

EP 0 410 870 A1

## DISPOSITIF D'ANALYSE SPECTRALE D'UN SIGNAL NUMÉRIQUE.

La présente invention concerne un dispositif d'analyse spectrale d'un signal numérique.

Le brevet des Etats-Unis d'Amérique n° 4 787 055 décrit un tel dispositif qui utilise la méthode connue sous le nom de "Transformée de Fourier Discrète". Par cette méthode on peut détermminer un spectre sur une large gamme de fréquence. Cependant si l'on veut une analyse précise de ce spectre, on est amené à prévoir des temps de calculs qui croissent avec la précision demandée ; les temps de calculs peuvent alors devenir rédhibitoires pour certaines applications où l'on cherche à obtenir une large gamme de fréquence et une analyse fine du spectre.

Une application visée est celle de l'analyse d'un signal numérique élaboré par un radioaltimètre à modulation linéaire de fréquence. On trouvera dans la demande de brevet français n° 2 600 778 la description d'un tel radioaltimètre.

Dans ce genre d'application on est confronté à un premier problème qui est celui de la grande variation d'altitude à mesurer allant de quelques mètres à quelques kilomètres et à un deuxième problème qui est celui de la rapidité de la mesure à fournir, compte tenu de la vitesse de l'aéronef dans lequel est placé le radioaltimètre. En outre les mesures doivent être données avec une précision compatible avec la sécurité à assurer, surtout en phase d'atterrissage.

Le dispositif précité ne peut pas résoudre ce double problème.

La présente invention propose un dispositif de ce genre qui, lui, résout ce double problème et est donc bien adapté à l'application envisagée.

Pour cela, un tel dispositif d'analyse spectrale est remarquable en ce qu'il comporte des accès de commande pour recevoir une information de méthode d'analyse destinée à commander au moins un circuit d'analyse.

L'idée de l'invention repose sur le fait que l'analyse spectrale doit être effectuée selon la méthode qui est la mieux adaptée aux circonstances.

Un dispositif d'analyse spectrale est remarquable, selon une caractéristique de l'invention, en ce que l'une des méthodes utilisées est la transformée de Fourier discrète, une autre implique la méthode du gradient et une troisième la méthode de Levinson. Ainsi, dans le cas de l'application envisagée à la mise en route du radioaltimètre la méthode de transformée de Fourier discrète est mise en oeuvre pour analyser grossièrement le spectre et si le spectre analysé laisse supposer une altitude élevée, la méthode impliquant la méthode de Levinson est utilisée et si l'altitude est basse, c'est la méthode impliquant la méthode du gradient.

La description suivante, accompagnée des dessins ci-annexés, le tout donné à titre d'exemple non limitatif, fera bien comprendre comment l'invention peut être réalisée.

La figure 1 représente le schéma d'un dispositif conforme à l'invention.

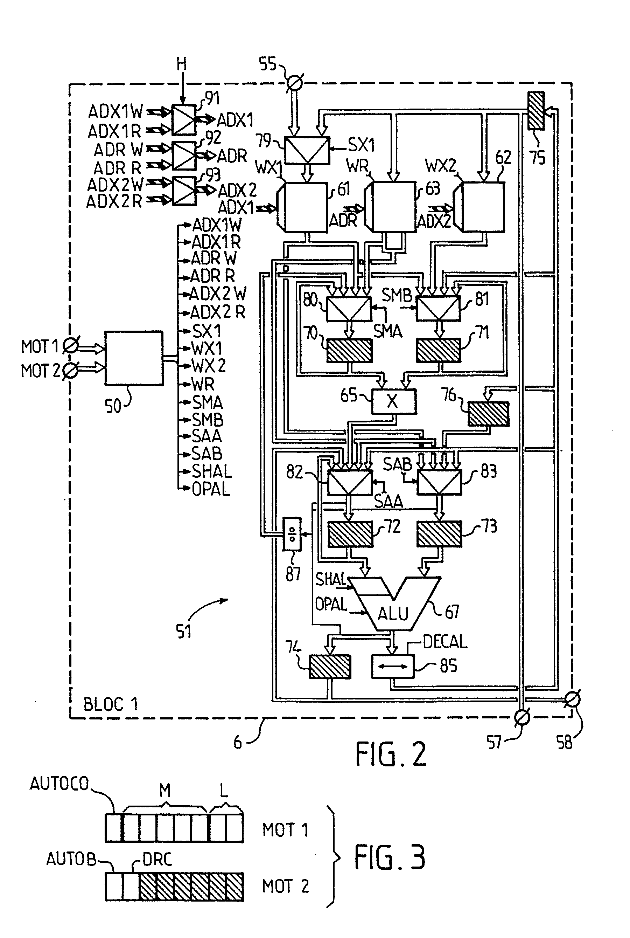

La figure 2 montre le schéma d'un premier circuit d'analyse faisant partie du dispositif montré à la figure 1.

La figure 3 montre la constitution des mots de commande du premier circuit d'analyse.

La figure 4 est un diagramme-temps destiné à l'explication de la formation des coefficients de corrélation.

La figure 5 représente l'implémentation des mémoires d'un circuit 6.

La figure 6 est un diagramme-temps destiné à l'explication de la méthode de Levinson.

La figure 7 représente l'implantation des mémoires de circuit 6 lors de la mise en oeuvre de la méthode de Levinson.

La figure 8 est un diagramme-temps relatif à la méthode de Levinson.

La figure 9 est aussi un diagramme-temps relatif à la méthode de Levinson.

La figure 10 est un diagramme-temps destiné à expliquer le fonctionnement pour la méthode du gradient.

La figure 11 représente l'implantation des mémoires pour la méthode de gradient.

La figure 12 représente un diagramme-temps pour expliquer le déclenchement effectif de la méthode du gradient.

La figure 13 représente la structure du deuxième circuit d'analyse.

La figure 14 représente les mots de commande utilisés pour ce deuxième circuit d'analyse.

La figure 15 est un diagramme-temps pour l'explication de la transformée de Fourier discrète.

La figure 16 est un diagramme-temps pour expliquer les opérations effectuées sur les coefficients d'un prédicteur.

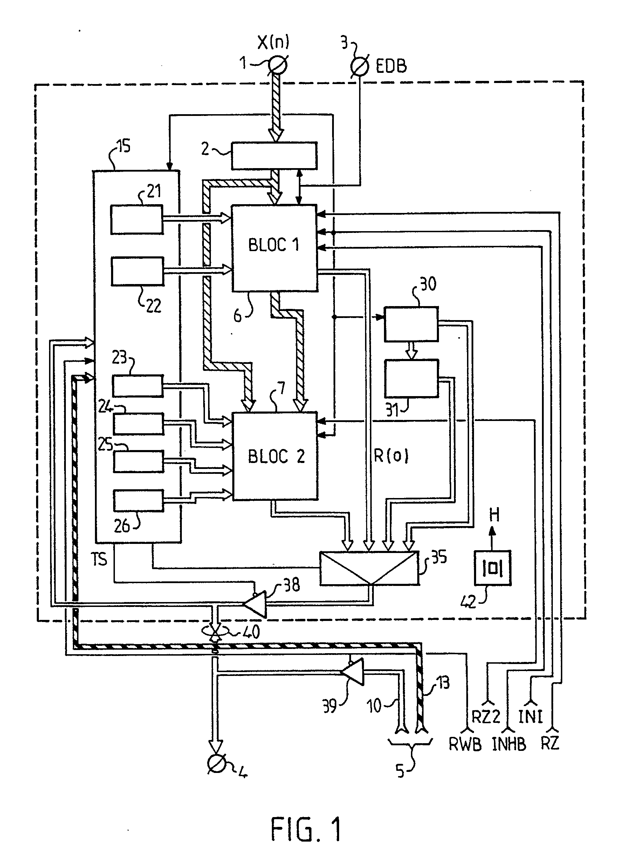

La figure 1 représente le dispositif d'analyse spectrale conforme à l'invention. A la borne d'entrée 1 il reçoit sous forme numérique les échantillons X(n) (où n indique l'instant d'apparition) d'un signal dont on se propose de faire l'analyse spectrale. Ce signal est emmagasiné dans un registre 2 sous la commande d'un signal EDB appliqué à la borne 3. Les composantes spectrales apparaissent sous forme numérique, aussi, à la borne 4.

Conformément à l'invention le dispositif comporte des accès 5 pour recevoir une information de méthode d'analyse destinée à commander les circuits d'analyse 6 et 7.

Dans l'exemple décrit, trois méthodes sont envisagées, mais ceci ne limite en rien l'invention.

Ces méthodes envisagées sont :

La méthode de la transformée de Fourier discrète exécutée uniquement par le circuit 7,

Les méthodes du gradient et de Levinson qui, exécutées par le circuit 6, fournissent les coefficients d'un prédicteur au circuit d'analyse 7. Ce circuit 7 établit finalement les composantes spectrales.

Les méthodes de Levinson et du gradient fournissent les coefficients a(k) d'un polynôme prédicteur qui détermine un échantillon prédit XP(n) en fonction des échantillons réels reçus précédemment ;

$$XP(n) = \sum_{p=1}^{M} a(p)X(n-p) \qquad (1)$$

où M définit l'ordre de modélisation.

A partir des coefficients a(p) on établit les composantes spectrales S(k) :

$S(k) = 1/\{[DR(k)]^2 + [DI(k)]^2\}^{\frac{1}{2}}$    (2)

$$DR(k) = 1 + \sum_{i=1}^{M} a(i).cos2\pi k.\frac{i}{N} \qquad (3)$$

$$DI(k) = \sum_{i=1}^{M} a(i).sin2\pi k \frac{i}{N} \qquad (4)$$

1/N définit l'espace qui sépare les composantes spectrales ; pour définir cet espace on prendra plutôt PR = 1/N ;

k = 1,..,NBR

où NBR définit le nombre de raies possibles et k leur rang.

La méthode de transformée de Fourier discrète fournit aussi les composantes S(k) :

$S(k) = \{[SR(k)]^2 + [SI(k)]^2\}^{\frac{1}{2}}$    (5)

$$SR(k) = 1 + \sum_{i=1}^{NH-1} X(i).cos2\pi k.\frac{i}{NH} \qquad (6)$$

$$SI(k) = \sum_{i=1}^{NH-1} X(i).sin2\pi k \frac{i}{NH} \qquad (7)$$

On notera aussi que la méthode de Levinson fait intervenir les coefficients de corrélation de la suite d'échantillons X(n) ;

$$R(j) = \frac{1}{NN} \sum_{n=0}^{NN-1} X(n).X(n+j) \qquad (8)$$

où j = 0 ... M+1

et NN représente la longueur, ou horizon d'accumulation. On fait aussi intervenir un paramètre d'oubli L dans la méthode du gradient pour un ajustement du coefficient d'autocorrélation R(0) à chaque échantillon X(n) :

$R(0) = (1-L).R(o) + X(n)^2$    (9)

on a $0 \leqq (1-L) \leqq 1$

Les paramètres définissant ces opérations, notamment les valeurs M, PR, NBR, NH, L sont transmis à l'accès 5 de la manière suivante.

3

L'accès 5 se décompose en une ligne de données 10 et une ligne d'adressage 13. La ligne d'adressage reliée à un circuit de registres de paramètres 15 permet de sélectionner un des registres 21, 22, 23, 24, 25 et 26 contenu dans ce circuit 15 de sorte que les données présentes sur la ligne 10 y soient enregistrées.

Les registres 21 et 22 sont destinés à contenir les informations régissant l'exécution de la méthode du gradient et de Levinson c'est-à-dire, entre autres, le paramètre d'oubli L et l'ordre de modélisation M.

Les registres 23 à 26 contiennent des informations concernant le fonctionnement du circuit d'analyse 7, notamment les paramètres PR, NBR...

Ceci sera expliqué plus en détail dans la suite du présent mémoire.

Le dispositif d'analyse comporte également une horloge de datation 30 servant à fournir une date à des événements, horloge couplée à un registre de datation 31 pour emmagasiner des dates remarquables.

Un circuit de sortie 35 permet d'aiguiller sur la sortie 4, outre les composantes de spectre, la valeur de coefficient d'autocorrélation R(0) souvent utile pour réguler le niveau d'amplification d'une chaîne réception, le contenu du registre 31 et la date élaborée par l'horloge 30, plus une valeur d'un statut définissant l'état dans lequel se trouve le dispositif. Différents amplificateurs à trois états 38 et 39 permettent à une seule ligne commune 40 de transmettre, sur l'acès 4f les informations de sortie du circuit 35 et les informations d'entrée pour le circuit 15. L'amplificateur 39 est mis à l'état passant par un signal RWB extérieur au circuit et mis à l'état actif pour signaler qu'une information doit être enregistrée dans le circuit 15. L'amplificateur 38 est mis à l'état passant par un signal TS émanant du circuit 15 en réponse à des demandes de l'extérieur appliquées à l'accès 5. Une horloge de cadencement 42 pilotée à partir de l'extérieur fournit des signaux H pour fixer la cadence de fonctionnement de tout le dispositif.

Différents signaux sont appliqués au dispositif de l'invention :
- le signal INI pour initialiser tout le dispositif,
- le signal RZ1 pour initialiser le circuit 6,
- le signal RZ2 pour initialiser le circuit 7,
- le signal INHB pour permettre certaines opérations comme cela sera indiqué plus loin.

On décrit dans ce qui suit, plus en détail, la structure et le fonctionnement du dispositif d'analyse spectrale de l'invention.

## 1 - DESCRIPTION DU CIRCUIT D'ANALYSE 6 (BLOC 1)

Il se compose essentiellement d'un circuit séquentiel 50 et d'un circuit de calcul 51.

Ce circuit séquentiel fournit différents signaux pour que le circuit de calcul 51 exécute les différentes tâches qui lui sont affectées.

Le circuit de calcul 51 traite les échantillons numériques qui sont appliqués à sa borne d'entrée 55 et il fournit à ses sorties 57 et 58 les coefficients a(p) et le coefficient de corrélation R(0). L'analyse des mots MOT1 et MOT2 contenus respectivement dans les registres 21 et 22 permet au circuit séquentiel 50 de piloter le circuit de calcul pour que la méthode de Levinson ou du gradient soit exécutée. Le circuit de calcul est formé d'un ensemble de mémoires 61, 62 et 63, d'un organe de multiplication 65 et d'une unité arithmétique et logique 67, d'un ensemble de registres 70, 71, 72, 73, 74 et 75 qui autorisent un fonctionnement en "pipe-line", d'un ensemble de multiplexeurs 79, 80, 81, 82 et 83 pour permettre l'aiguillage des informations vers les différents éléments constitutifs du circuit 51, d'un organe de décalage 85 et d'un circuit d'aide à la division 87 coopérant avec l'unité 67. Ces différents éléments sont connectés de la manière suivante. La sortie du multiplexeur 79 muni de deux entrées est reliée à l'entrée de données de la mémoire 61 l'une de ses entrées constitue l'entrée 55, l'autre entrée est reliée a la sortie du registre 75 qui constitue la sortie 57. La sortie du registre 75 est, aussi, reliée aux entrées des mémoires 62 et 63. Les registres 70 et 71 sont destinés à contenir les opérandes pour la multiplication à effectuer par l'organe de multiplication 65. Les multiplexeurs 80 et 81 à quatre entrées correspondant à des positions de multiplexage permettent le stockage de ces opérandes. Dans une position de multiplexage du multiplexeur 80, le registre 70 est bouclé sur lui-même, dans une deuxième position le registre 70 est mis en relation avec le circuit 87, dans une troisième position il est mis en relation avec la sortie de données de la mémoire 61 et dans une quatrième position avec la sortie de données de la mémoire 63. Quant aux positions de multiplexage du multiplexeur 81 elles mettent en relation le registre 71 avec la sortie de données de la mémoire 61 pour une première position, avec la sortie de données de la mémoire 62 pour une deuxième position, avec la sortie de l'unité 67, via l'organe de décalage 85 pour une troisième position et avec lui-même pour la quatrième position. Le multiplexeur 82 est à cinq positions et il met en relation le registre 72, qui est un registre d'opérande pour l'unité 67, avec lui-même pour une première position, avec la sortie du registre 74 connectée en sortie de l'unité 67 pour une deuxième position, avec la sortie de l'organe de multiplication 65 pour une troisième, avec la sortie de données de la mémoire 63 pour une quatrième et avec la sortie de l'organe 85 pour la dernière ou cinquième. Le multiplexeur 83 est à quatre positions et met en relation le registre 73, qui est un registre pour l'autre opérande de l'unité 67 avec la sortie de données de la mémoire 61 pour une première position, avec la sortie de données de la mémoire 63 pour une deuxième position, avec le registre 76 dont l'entrée est connectée à la sortie de l'organe de décalage 85 pour une troisième position et avec cette sortie de l'organe 85 pour une quatrième position.

Le circuit séquentiel 50 fournit différents signaux SX1, SMA, SMB et SAA pour l'aiguillage à provoquer à l'intérieur des multiplexeurs 79, 80, 81, 82 et 83 respectivement. Des codes de commande OPAL pour l'unité 67 peuvent être accompagnés de codes de décalage SHAL agissant sur l'opérande contenu dans le registre 72. Ce circuit séquentiel 50 fournit aussi des codes d'adressages de lecture et d'écriture pour les mémoires 61, 62 et 63. Soient les codes ADX1W et ADX1R pour l'adressage en écriture et en lecture de la mémoire 61, les codes ADX2W et ADX2R concernant la mémoire 62 et les codes ADRW et ADRR pour la mémoire 63. Ces codes d'adressage d'écriture et de lecture sont appliqués à des multiplexeurs d'adressage 91, 92 et 93 qui fournissent les codes d'adressages ADX1, ADX2 et ADR pour les mémoires 61 à 63. Les commandes de commutation à l'intérieur des multiplexeurs 91 à 93 sont effectuées systématiquement au rythme du signal H. Une première demi-période de ce signal est affectée à l'écriture donc, les codes ADX1, ADX2 et ADRR sont les codes ADX1W, ADX2W et ADRW. Pendant cette première demi-période, une inscription pourra avoir lieu si le signal d'écriture WX1, WX2 et WR appliqué aux mémoires 61, 62 et 63 est actif.

## 2 - FONCTIONNEMENT DU CIRCUIT D'ANALYSE 6

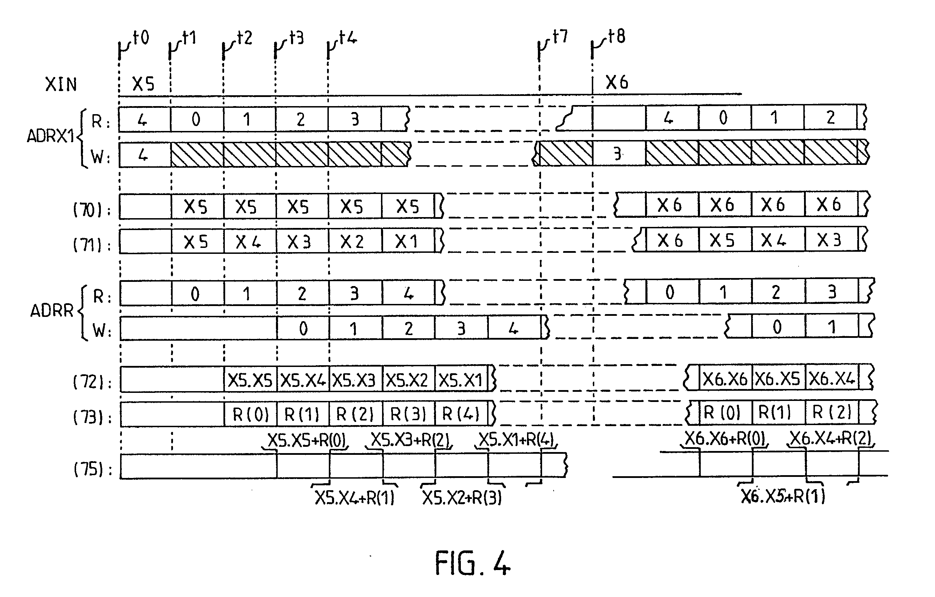

Il est déclenché par le décodage de l'ensemble des mots MOT1 et MOT2 contenu dans les registres 21 et 22 à huit éléments binaires. La structure de ces mots est représentée à la figure 3. Un élément binaire AUTOCO : la valeur "1" de cet élément binaire déclenche le calcul des coefficients d'autocorrélation et implique que la méthode de Levinson va être exécutée. Des éléments binaires définissent M, qui fixe l'ordre de modélisation, l'élément L fixe la valeur d'oubli utilisée dans la méthode du gradient ; AUTOB, actif lorsque l'élément binaire est égal à "0", commande une remise à zéro automatique et DRC considéré pour la méthode du gradient donne le départ de réactualisation des coefficients, actif pour une valeur "1" de l'élément binaire.

### 2-A METHODE DE LEVINSON - A1 - Calcul des coefficients d'autocorrélation

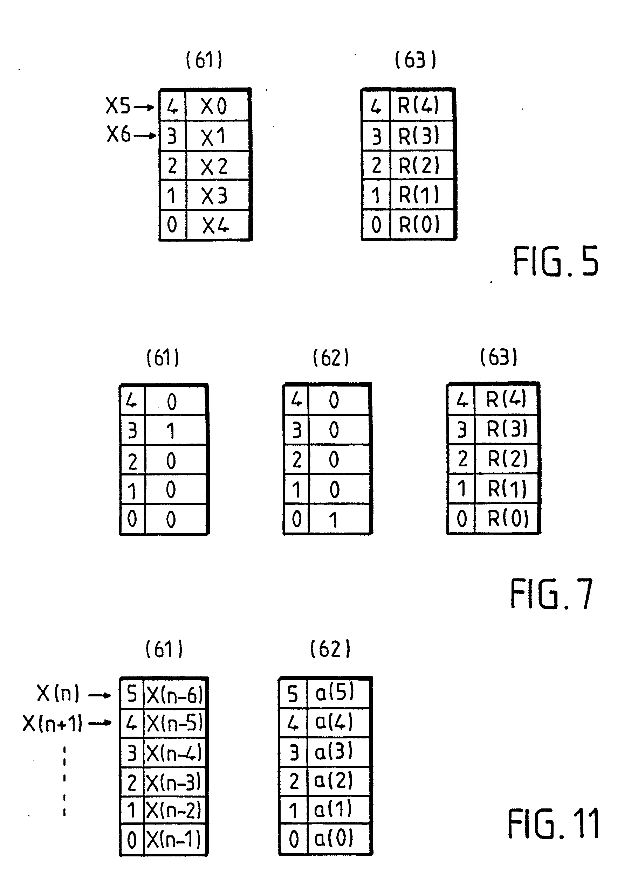

On se reporte à la figure 4 qui est un diagramme-temps et à la figure 5 qui montre l'implantation dans les mémoires 61 et 63 des différents valeurs en fonction des codes d'adresse. Pour la simplicité des explications on a limité à 5 le nombre de code d'adresse mais la généralisation à "p" codes se fera facilement.

Sur les diagrammes-temps mentionnés dans le présent exposé, on a fait figurer des cycles de fonctionnement dont la durée est égale à la période du signal d'horloge H. Conformément à ce qui a été dit, chaque cycle est divisé en deux parties. Durant la première partie, des écritures peuvent avoir lieu dans les différentes mémoires et la deuxième partie est consacrée à la lecture.

A la figure 4, on se place à l'instant t0 où un échantillon valide surgit à la borne 55, soit X5 cet échantillon. La figure 5 montre l'implantation des échantillons antérieurs X4, X3, ..., X0 dans la mémoire 61 rangés respectivement aux adreses "0", "1" ..., "4". A cet instant le code d'adresse de lecture et d'écriture de la mémoire 61 est "4", l'échantillon X5 est inscrit dans cette mémoire puis est lu et enfin se trouve enregistré dans les deux registres d'opérande 70 et 71 de l'organe de multiplication 65 à l'instant t1 de sorte que le produit X5.X5 se retrouve dans le registre 72 à l'instant t2, tout comme le coefficient R(0) se retrouve dans le registre 73, ce code d'adresse de lecture de la mémoire à l'instant antérieur étant "0". La somme X5.X5 + R(0) se retrouve dans le registre 75 à l'instant t3 et concerne le code d'écriture de la mémoire 62, "0" ; le coefficient de corrélation R(0) est donc remis à jour par la contribution de X5.X5. La mise à jour du coefficient R(1) commence à l'instant t1 où l'échantillon X4 est adressé en lecture et se retrouve à l'instant t2 dans le registre 71 et, comme le registre 70 contient toujours l'échantillon X5, le produit X5.X4 est formé à l'instant t3 dans le registre 72. Le coefficient R(1) se retrouve dans le registre 73 pour y être additionné avec le contenu du registre 72, le coefficient R(1) est ré-enregistré dans la mémoire 63 à l'instant t4. Ainsi, de la même manière, les différents coefficients restants R(2), R(3) et R(4) vont être remis à jour par la contribution de l'échantillon X5. Le processus se termine à l'instant t7. A l'instant t8 surgit un nouvel échantillon X6. Le traitement s'effectue alors de la même manière que pour l'échantillon X5. On notera cependant le décalage des codes d'adresses d'écriture et de lecture de la mémoire 61.

Le processus d'autocorrélation s'arrête dès que l'horizon programmé est atteint. La méthode de Levinson est alors exécutée.

## 2-A METHODE DE LEVINSON - A2 - Phase d'initialisation

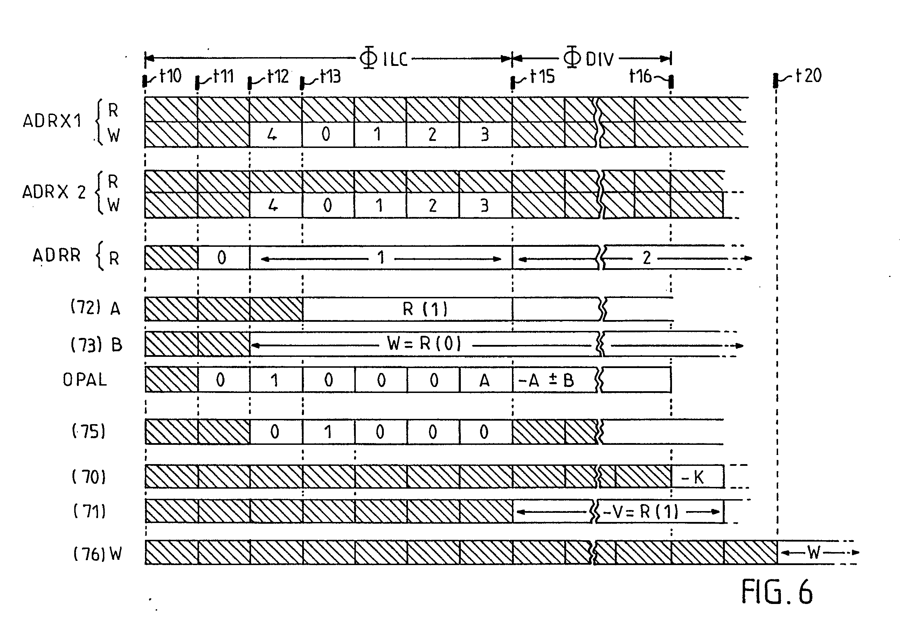

Durant une première partie de cette phase, les coefficients du prédicteur a(k), hormis a(0) = 1, sont mis à zéro. La figure 6 est un diagramme-temps qui représente cette phase d'initialisation $\phi$ILC. Les codes d'ordre d'adressage ADRX1(R) et ADRX2(R) vont évoluer entre les valeurs "0" et "M-1", la valeur M étant contenue dans le registre 21.

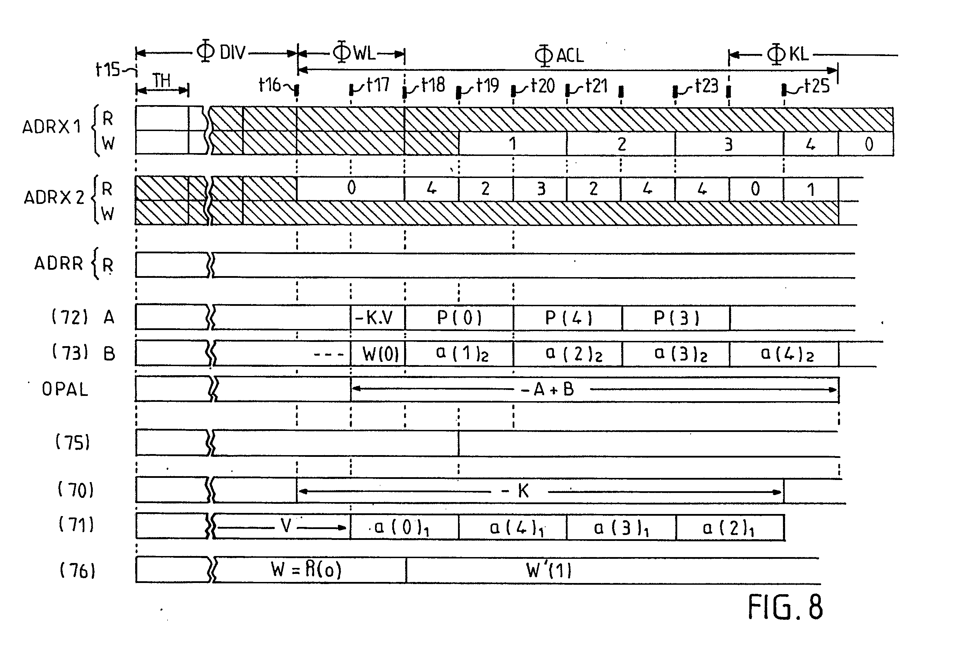

L'évolution de ces codes n'a pas à être considérée pour cette phase. On considère maintenant l'instant t11 où le code OPAL appliqué à l'unité 67 est "0", c'est-à-dire que le résultat à sa sortie est à la valeur "0" quelles que soient les valeurs des opérandes appliquées à ses entrées. Cette valeur "0" est enregistrée dans le registre 75 et est enregistrée dans les mémoires 61 et 62 à l'adresse "4" après l'instant t12. A cet instant t12, le code OPAL est "1", ce qui implique que le code à sa sortie est forcément "1", pour qu'à l'instant t13, le chiffre "1" soit enregistré aux adresses "3" et "0" des mémoires 61 et 62. Après cet instant t13, le code OPAL redevient égal à "0" pour que des "0" soient enregistrés dans les autres emplacements des mémoires 61 et 62. Ceci se termine à l'instant t15. La répartition des contenus des mémoires 61, 62 et 63 est montrée à la figure 7.

Durant la seconde partie de cette phase d'initialisation un paramètre K intervenant dans la méthode de Levinson est initialisé, pendant une phase $\phi$DIV à une valeur telle que :

K = R(1)/R(0) en général K = V/W

Cette division fait intervenir l'organe d'aide à la division 87 qui est un registre à décalage qui contient le résultat de cette division en emmagasinant au fur et à mesure les éléments binaires constituant ce résultat. Cette division commence à l'instant t15. Le dividende est contenu dans le registre 72 dans lequel a déjà été enregistrée la valeur R(1) à l'instant t13 et le diviseur est contenu dans le registre 73 qui contient la valeur R(0) depuis l'instant t12. La comparaison des contenus des registres 72 et 73 donne la valeur d'un élément binaire du quotient, et le contenu du registre 72 s'impute, en valeur absolue, de la valeur du diviseur qui reste identique à lui-même durant tout le processus de division mais le contenu du registre 72 est multiplié par 2. A l'instant t15 le code OPAL est -A + B ou -A-B selon le signe du dividende et du diviseur de du dividende et du diviseur de sorte que la quantité -K est en fait calculée.

Cette valeur se trouve à l'instant t16 après le processus de division qui a duré 16 coups d'horloge correspondant à 16 bits, par exemple.

## 2-A METHODE DE LEVINSON - A3 - Phase de réactualisation des coefficients

Cette phase implique M fois l'exécution successive de trois phases élémentaires la phase : $\phi$DIV déjà mentionnée, la phase $\phi$ACL qui modifie les coefficients, la phase $\phi$WL insérée dans la phase $\phi$ACL et prévue pour modifier un paramètre W et la phase $\phi$KL qui modifie la valeur des coefficients pour la phase $\phi$ACL suivante. La valeur a(0) reste égale à "1" durant tout le déroulement de l'exécution de la méthode de Levinson.

La figure 8 est un diagramme-temps qui représente plus particulièrement la phase $\phi$ACL. Après la phase d'initialisation, les opérations suivantes sont exécutées durant la phase $\phi$ACL.

$a(1)_2 = a(1)_1 + K.a(0)_1 = K$     (A1)
$a(2)_2 = a(2)_1 + K.a(4)_1 = 0$     (A2)
$a(3)_2 = a(3)_1 + K.a(3)_1 = 0$     (A3)
$a(4)_2 = a(4)_1 + K.a(2)_1 = 0$     (A4) où les indices 1 et 2 représentent respectivement les mémoires 61 et 62. La première fois la mémoire 61 est la source des coefficients a(i) et la mémoire 62 la destination de ces mêmes coefficients.

A l'instant t16 (voir figure 8), le code ADRX2(R) est "0", ce qui permet au coefficient a(0) de se retrouver à l'instant t17 dans le registre 71 et comme le paramètre -K est dans le registre 70, le produit PO = K.a(0) se trouve, à l'instant t18, dans le registre 72 alors que dans le registre 73 se trouve le coefficient $a(1)_1$ et comme le code OPAL est -A + B le résultat a(1) + K.a(0) est fourni par l'unité 67 pour être rangé à l'instant t19 en transitant par le registre 75 dans la mémoire 62, le code ADRX2(W) étant "1". Ainsi l'opération (A1) est exécutée. A cet instant t19 le coefficient a(4) provenant toujours de la mémoire 62 se trouve dans le registre 71 pour que le produit P(4) = K.a(4) soit effectué. Ce produit est additionné avec le coefficient a(2) à l'instant t20 de sorte que l'opération (A2) est exécutée et le nouveau coefficient a(2) est rangé dans la mémoire 61 à l'instant t21. D'une manière semblable les opérations (A3), (A4) sont exécutées pour que les coefficients a(3) et a(4) soient rangés dans la mémoire 62 aux instants t23 et t25.

Du fait du fonctionnement en "pipe-line" on notera la présence d'une phase $\phi$WL (voir figure 8) qui démarre avant la fin dela phase $\phi$DIV. Cette phase se déroule entre les instants t16 et t17 et a pour but de remettre à jour un coefficient $W'$ à partir de sa valeur antérieure et du paramètre K selon la formule :

$$W' = W - K.V$$

La valeur de ce paramètre W est contenue dans un registre 76. Sa valeur initiale est :

$$W = R(0)$$

Comme à l'instant t16 on a obtenu la valeur -K et que la valeur V, dont la valeur initiale est R(1), est stockée dans le registre 71, le produit K.V est exécuté et se retrouve à l'instant t17 dans le registre 72 pour être additionné à la valeur W précédente provenant du registre 76. La nouvelle valeur $W'$ est finalement emmagasinée dans le registre 76 à l'instant t18.

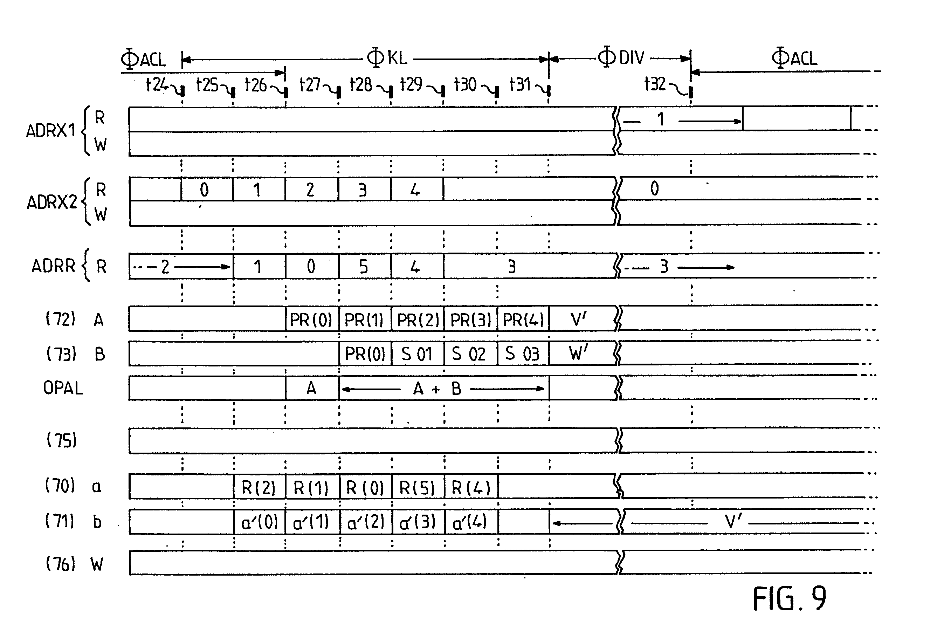

A la suite de la phase $\phi$ACL se déroule une phase $\phi$KL dont le diagramme-temps est montré à la figure 9.

Durant cette phase, l'opération suivante est exécutée :

$$V = R(2).a_2(0) + R(1).a_2(1) + R(0).a_2(2) - R(5).a_2(3) + R(4).a_2(4) \text{ pratiquement :}$$

$$V = R(2) + R(1).a_2(1)$$

puisque les autres coefficients $a_2(j)$ sont encore nuls.

Cette phase débute à l'instant t24 lorsque le code ADRX2(R) est le code "0" et comme le code ADRR-(R) était déjà égal à 2, les valeurs R(2) et $a_2(0)$ peuvent être mises à l'instant t25 dans les registres 70 et 71. Le produit PR(0) de ces valeurs est à l'instant t26 dans le registre 72 puis à l'instant t27 dans le registre 73 en transitant par l'unité 67. A l'instant t27 le produit PR(1) qui est le produit de R(1) par $a_2(1)$ se trouve dans le registre 72 de sorte que la somme peut être effectuée, le résultat SO1 est alors mis, à l'instant t29, dans le registre 73 qui va faire ainsi office d'accumulateur. Les produits successifs PR(2), PR(3) et PR(4) égaux respectivement à $R(0).a_2(2)$, $R(5).a_2(3)$, et $R(4).a_2(4)$ vont se trouver successivement aux instants t28, t29 et t30 dans le registre 72 et s'accumuler dans le registre 73 et le résultat final stocké à t31 dans le registre 71 et dans le registre 72.

Après l'instant t31, une autre phase de division est déclenchée pour évaluer la quantité $V'/W'$ ce qui donne le coefficient $K'$ utile pour l'évolution des coefficients du prédicteur. Avant d'examiner la phase $\phi$ACL qui suit et qui débute à l'instant t32 il convient de noter la valeur des codes d'adresse de lecture des mémoires 61, 62 et 63 (le code d'adresse d'écriture étant retardé des codes d'adresses de lecture de deux temps d'horloge TH) qui sont respectivement (1, 0, 3).

A la phase suivante $\phi$ACL les opérations effectuées sont :

$$a(1)_1 = a(1)_2 + K'.a(1)_2 = K + K'K \quad (A5)$$
$$a(2)_1 = a(2)_2 + K'.a(0)_2 = K' \quad (A6)$$
$$a(3)_1 = a(3)_2 + K'.a(4)_2 = 0 \quad (A7)$$
$$a(4)_1 = a(4)_2 + K'.a(3)_2 = 0 \quad (A8)$$

Pour ces opérations le rôle des mémoires 61 et 62 est échangé, de sorte que la mémoire 62 va être adressée comme la mémoire 61 et vice versa.

Ainsi, après l'exécution de plusieurs phases successives, l'évolution de la valeur des coefficients du prédicteur est la suivante, donnée par le jeu d'équations (A9 à A12 d'une part et A13 à A16 d'autre part) :

$$a(1)_2 = a(1)_1 + K''.a(2) \quad (A9)$$
$$a(2)_2 = a(2)_1 + K''.a(1) \quad (A10)$$
$$a(3)_2 = a(3)_1 + K''.a(0) = K'' \quad (A11)$$
$$a(4)_2 = a(4)_1 + K''.a(4) = 0 \quad (A12)$$
$$a(1)_1 = a(1)_2 + K'''.a(3) \quad (A13)$$
$$a(2)_1 = a(2)_2 + K'''.a(2) \quad (A14)$$
$$a(3)_1 = a(3)_2 + K'''.a(1) \quad (A15)$$
$$a(4)_1 = a(4)_2 + X'''.a(0) = K''' \quad (A16)$$

## 2-B METHODE DU GRADIENT

Cette méthode va être décrite pour un ordre 5, toujours à titre d'exemple.

Elle est exécutée en quatre phases : une phase d'attente d'échantillon $\phi$AG, une phase de calcul de R-

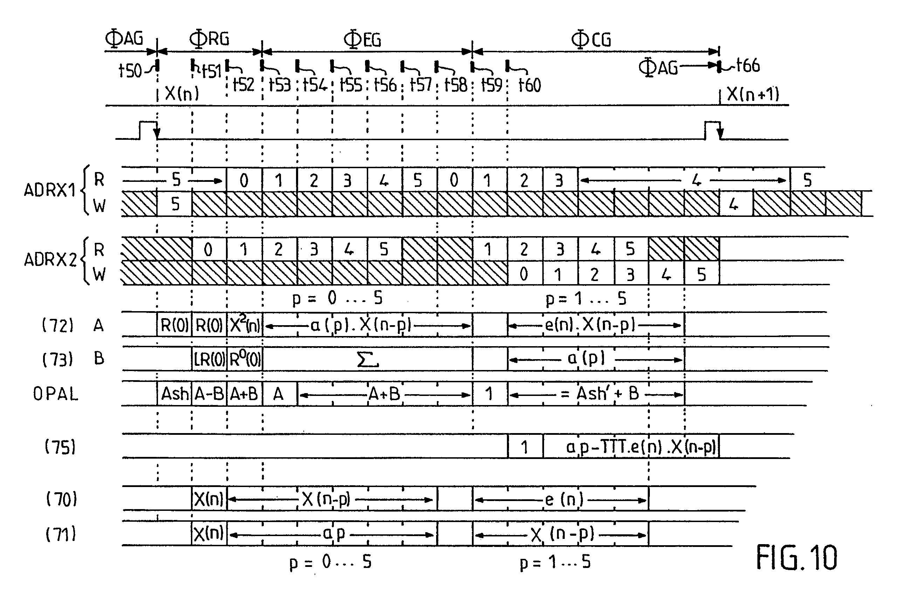

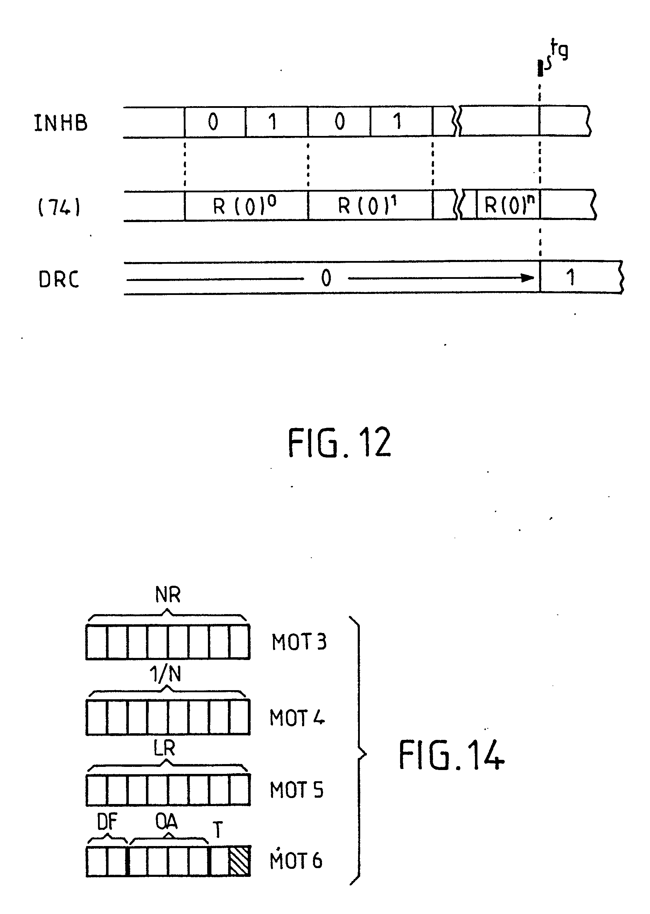

(0) : $\phi$RG, une phase de calcul de l'erreur $\phi$EG et une phase de remise à jour des coefficients du prédicteur $\phi$CG. Cette méthode est explicitée à l'aide du diagramme-temps de la figure 10 et de l'implémentation des mémoires représentée à la figure 11.

## 2-B METHODE DU GRADIENT - B1 - Phase $\phi$AG

Soit l'instant t50 où apparaît un échantillon X(n). La phase d'attente $\phi$AG se situe donc antérieurement à cet instant. Cette phase se caractérise essentiellement par un arrêt de l'évolution des codes d'adressages ADRX1 et ADRX2.

## 2-B METHODE DU GRADIENT - B2 - Réactualisation de R(0) (phase $\phi$RG)

Durant cette phase, la valeur de R(0) qui est contenue dans le registre 74 est remise à jour selon la formule (3) :
R(0) = (1-L)R0 + X$^2$(n)
La valeur L provient du registre 21. Pour signaler qu'un échantillon X(n) se trouve à l'entrée de la mémoire 61 via le multiplexeur 79, une transition descendante d'un signal EDI est engendrée. La valeur R(0) antérieure, contenue dans le registre 74 est mise dans le registre 72. Le code d'opération appliqué à l'unité 67 est un code de décalage d'opérande "As4" pour diviser l'opérande contenu dans le registre A d'un multiple de deux, ce qui revient à le décaler d'une quantité dépendant de "L". Ce code décalé se retrouve à l'instant t51 dans le registre 73. Dans le registre 72, se trouve toujours la valeur antérieure R(0).

A l'instant t50 l'échantillon X(n) est enregistré dans la mémoire 61 à l'adresse "5" et prend ainsi la place de l'échantillon le plus ancien (à la figure 11, l'échantillon X(n-6)) et est restitué à l'instant t51 pour être emmagasiné dans les registres 70 et 71. Le produit X$^2$(n) est alors exécuté.

A l'instant t52, d'une part la valeur R(0) a subi l'influence du facteur d'oubli et porte la référence R$^0$(0) -à la figure 10 cette valeur est emmagasinée dans le registre 74- d'autre part le résultat du produit X$^2$(n) est mis dans le registre 72. La phase $\phi$RG est terminée à l'instant t53, lorsque l'addition des valeurs contenues dans les registres 72 et 73 est effectuée et le résultat rangé dans le registre 74.

## 2-B METHODE DU GRADIENT - B3 - Calcul de l'erreur (Phase $\phi$EG)

Durant cette phase le calcul suivant va être exécuté :

$$e(n) = \sum_{p=0}^{5} a_0 . X(n-p) \qquad (B1)$$

où e(n) est l'erreur.

Cette phase démarre avec les calculs déjà commencés durant la phase $\phi$RG. Ainsi à l'instant t51 les codes d'adresses de lectures ADRX1(R) et ADRX2(R) étaient "5" et "0" respectivement, ce qui permet aux valeurs X(n) et a(0) de se retrouver dans les registres d'entrée 70 et 71 de l'organe de multiplication à l'instant t52 de sorte qu'à l'instant t53 le premier élément de la somme indiquée dans la dernière formule se trouve dans le registre 72 à l'instant t53 et à l'instant t54 ce résultat se retrouve dans le registre 73 qui va servir d'accumulateur. Ainsi aux instants t54, t55, t56, t57 et t58, les différents produits a1.X(n-1), a2.X(n-2), a3.X(n-3), a4.X(n-4) et a5.X(n-5) vont se trouver successivement dans le registre 72 pour que l'accumulation puisse s'effectuer dans le registre 73. A l'instant t59, le calcul de e(n) est terminé et le résultat est mis dans le registre 70 pour que la phase suivante puisse s'effectuer.

## 2-B METHODE DU GRADIENT - B4 - Mise à jour des coefficients phase $\phi$CG

Durant cette phase les calculs suivants sont effectués :
a'(0) = 1    (B2)
a'(p) = a(p) - TTT.e(n).X(n-p)    (B3)
avec p = 1 à 5,

les valeurs accentuées représentent la valeur mise à jour, la valeur TTT est normalisée par la valeur R(0) lors d'un calcul préalable, est fixe et est obtenue par un décalage de l'opérande contenu dans le registre 72.

Ce code représenté à la figure 10 par "-Ash' + B" apparaît dès l'instant t60, pour le calcul des différents coefficients de la formule (B3). La formule (B2) étant calculée à l'instant t59 le code d'opération appliqué à l'organe force à "1" sa valeur de sortie. A l'instant t66 tous les coefficients contenus dans la mémoire 62 ont été mis à jour.

## 2-B METHODE DU GRADIENT - B5 - Enchaînement avec un nouvel échantillon

A la phase $\phi$CG peut se superposer une phase d'attente pour l'échantillon suivant X(n + 1). Sur la figure on admet que cet échantillon surgit à l'instant t66. Cet échantillon est enregistré à l'adresse "4" de la mémoire, le traitement s'effectue comme ci-dessus mais tous les codes d'adresses sont incrémentés d'une unité et ainsi de suite pour les autres échantillons qui surviennent.

Il va de soi que différentes mesures ont été prises pour assurer la cohérence du calcul de coefficients, lorsque le dispositif est utilisé dans un radioaltimètre du type décrit dans la demande de brevet 2622021.

## 3 - DESCRIPTION DU CIRCUIT D'ANALYSE 7 (BLOC 2)

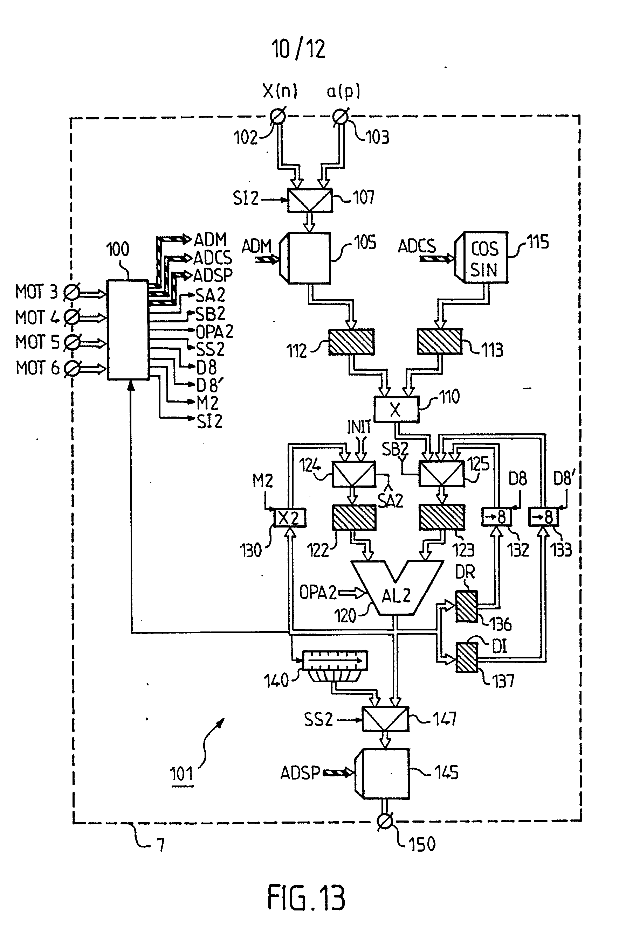

Le schéma est représenté à la figure 13. Ce circuit est constitué essentiellement par un circuit séquentiel 100 et par un circuit de calcul 101.

Tout comme pour le circuit 5, le circuit séquentiel 100 fournit différents signaux de commande pour que le circuit de calcul 101 exécute les différentes tâches qui lui sont affectées en fonction des informations contenues dans les registrès 23, 24, 25 et 26 eux-mêmes contenus dans le circuit de registres de paramètres 15 (figure 1).

Le circuit d'analyse est muni de deux entrées 102 et 103 pour pouvoir traiter soit les échantillons pour effectuer une transformée de Fourier discrète, soit les coefficients du prédicteur afin de restituer les composantes spectrales.

Les échantillons et les coefficients sont enregistrés dans une mémoire 105 en transitant par un multiplexeur 107. Il y est prévu un organe de multiplication 110 pour faire le produit des nombres contenus dans des registres de "pipeline" 112 et 113. Ces registres sont connectés en sortie de la mémoire 105 et d'une mémoire 115 fournissant des valeurs de cosinus et de sinus, comme cela sera explicité dans la suite du présent exposé. Une unité arithmétique et logique 120 effectue différentes opérations en fonction d'un code d'opération 0PA2. Les registres d'opérandes 122 et 123 sont connectés respectivement aux sorties de multiplexeurs 124 et 125. Le multiplexeur 124 est muni de deux entrées ; l'une reçoit un code d'initialisation pour initialiser le contenu du registre 122 et l'autre est connectée à la sortie de l'unité 120 par l'intermédiaire d'un organe de multiplication 130 qui multiplie ou non par deux le code de sortie de l'unité 120. Le multiplexeur 125 est muni, lui, de 3 entrées, la première est reliée à la sortie de l'organe 110 et les deuxième et troisième à des organes de décalage 132 et 133, respectivement. Ces organes de décalage décalent ou non de 8 bits vers la droite les nombres contenus dans des registres 136 et 137.

Un registre 140 qui est du type registre à décalage, enregistre la valeur de l'élément binaire de plus fort poids du code à la sortie de l'unité 120. Les sorties parallèles de ce registre sont connectées aux entrées de données d'une mémoire 145 via un multiplexeur 174 à deux entrées qui permet aussi de mettre en relation la sortie del'unité 120 avec la mémoire 145. Les composantes de spectre sont rendues disponibles à la sortie 150 de la mémoire 145, ce qui constitue en fait la sortie du circuit 7.

Les mémoires 105 et 145 sont adressées de la même manière que les mémoires 61, 63 au moyen d'un code d'adresse ADM et ADSP. La mémoire 115 qui est une mémoire à lecture seule est adressée par le code ADCS. Les signaux SI2, SA2, SB2 et SS2 positionnent les multiplexeurs 107, 124, 125 et 147. Le signal M2 appliqué à l'organe 130 pour autoriser ou non une multiplication par deux des signaux D8 et D8' force les organes 132 et 133 à diviser par 8 ou non en effectuant un décalage correspondant à cette division. Le code OPA2 commande les opérations à effectuer par l'unité 120. Le circuit 100 élabore ces différents signaux et codes ADM, ADCS, ADSP, SA2, SB2, OPA2, SS2, D8, D8', M2 et SI2 en conformité avec le fonctionnement de ce circuit 7 expliqué ci-dessus.

## 4 - FONCTIONNEMENT DU CIRCUIT D'ANALYSE 7

**4-A TRANSFORMEE DE FOURIER DISCRETE (TFD) TFD - A1 - Calcul des composantes (phase CF)**

Durant cette phase on effectue le calcul, pour les différentes raies de leurs composantes réelle SR(k) et imaginaire SI(k) :

$$SR(k) = \sum_{i=0}^{N-1} X(i).cos(2\pi k.\frac{i}{N}) \qquad (D1)$$

$$SI(k) = \sum_{i=1}^{N-1} X(i).sin(2\pi k.\frac{i}{N}) \qquad (D2)$$

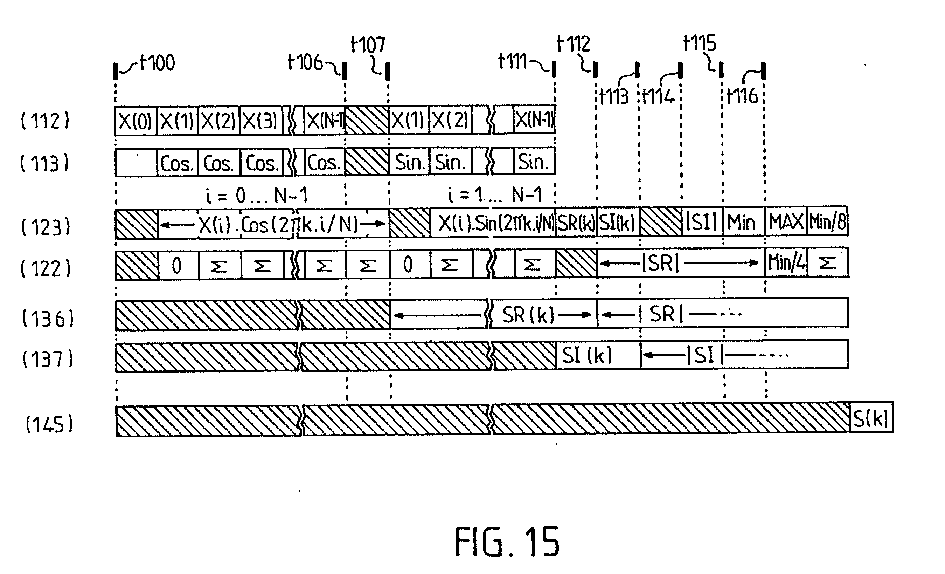

Les différents échantillons ont été stockés au préalable dans la mémoire 105. Le calcul de la composante SR(k) commence à l'instant t100 (voir figure 15). A chaque coup d'horloge les échantillons X-(0), X(1), ..., X(N-1) vont venir occuper le registre 112 et simultanément les différentes valeurs de cos : 1, cos2πk/N, ..., cos2πk N-1/N, vont venir occuper le registre 113 de sorte que le produit indiqué par la formule (D1) puisse s'effectuer. Le résultat du produit est stocké à chaque coup d'horloge dans le registre 123. Le registre 122 sert d'accumulateur et est mis à zéro (INIT) au préalable. Lorsque le calcul de SR(k) est terminé, le résultat est mis dans le registre 136 (t107). L'instant t107 marque aussi le démarrage du calcul de SI(k) qui s'effectue de la même manière que SR(k) mais en commençant avec l'échantillon X(1) et les valeurs de sinus telles que données par la formule (D2). Le résultat est mis à l'instant t111 dans le registre 137.

**4-A TFD - A2 - Calcul de la composante S**

Selon une caractéristique de l'invention, la quantité :
$S(k) = \sqrt{[SR(k)]^2 + [SI(k)]^2}$     (D3)
est évaluée de la manière suivante :
$S(k) = MAX[|SR(k)|,|SI(k) + 3/8 MIN[|SR(k)|, |SI(k)|]$
où MAX[A,B] = A si A>B
= B si B>A
où MIN[A,B] = A si A<B
= B si B<A

Cette approximation amène une imprécision de 5 % seulement. Pour cela à l'instant t111 la valeur SR-(k) est transférée du registre 136 au registre 123. Le code OPA2 est tel que, à la sortie de l'unité 120, on obtient sa valeur absolue |SR| qui est transférée au temps t112 dans le registre 122. A cet instant t112 la valeur SI(k) est mise dans le registre 123 de sorte qu'à l'instant t113 sa valeur valeur absolue |SI| est mise dans le registre 137 et se retrouve à l'instant suivant t114 dans le registre 123. Il est dès lors possible de déterminer la plus grande de ces quantités [|SR| et |SI| appelée MAX et par conséquent la plus petite MIN. Le résultat de cette comparaison est envoyé au circuit séquenceur 100 de sorte que les contenus des registres 136 et 137 puissent être judicieusement envoyés dans les registres 123 et 122. Ainsi, à l'instant t115 la valeur MIN qui est contenue dans l'un des registres 136 et 137 est mise dans le registre 123 ; cette valeur est divisée par l'unité 120, le résultat est mis à l'instant t116 dans le registre 122 alors que lea valeur MAX est mise dans le registre 122 qui va servir d'accumulateur pour accumuler successivement la valeur MAX à l'instant t117 et la valeur MIN/8 à l'instant t118 obtenue par l'un des décaleurs 132 et 133 ; selon que la valeur MIN est contenue dans le registre 136 et 137 à l'instant t118 la composante spectrale peut être enregistrée dans la mémoire 145.

**4-B CALCUL DU SPECTRE A PARTIR DES COEFFICIENTS DU PREDICTEUR**

Les calculs à effectuer sont :

$$DR(k) = 1 + \sum_{i=1}^{M} a(i).\cos 2\pi k \frac{i}{N} \qquad (D4)$$

$$DI(k) = \sum_{i=1}^{M} a(i).\sin 2\pi k \frac{i}{N} \qquad (D5)$$

$D(k) = \sqrt{DR(k)^2 + DI(k)^2}$    (D6)

$S(k) = 1/D(k)$    (D7)

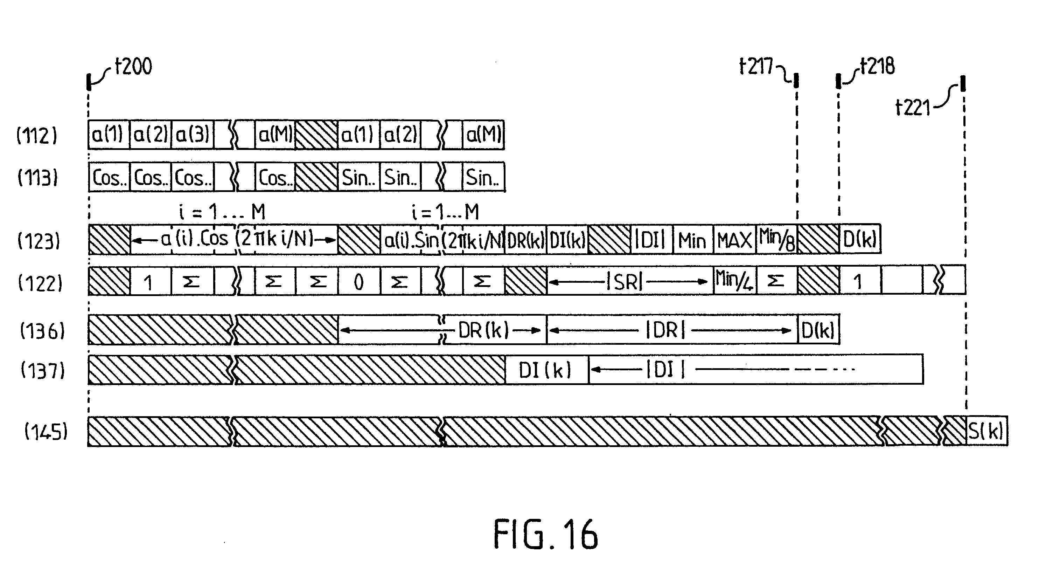

On remarquera que les calculs (D4), (D5), (D6) sont pratiquement identiques à ceux de la TFD et sont représentés entre les instants t200 à t228 à la figure 16. La division indiquée par la formule (D7) va faire intervenir le registre 140. On se place à l'instant t217 où se termine l'exécution de la formule (D5) mais, ici, le résultat est envoyé dans le registre 136 pour se retrouver à l'instant t218 suivant dans le registre 123 qui contient dès lors le diviseur de la division indiquée à la formule (D7) ; en ce même instant le chiffre "1" est mis dans le registre 122 en tant que dividende. Ce chiffre "1" résulte d'une commande OPA2 appliquée à l'instant antérieur. Le processus de division démarre alors et le résultat final, contenu dans le registre 140, peut alors être transféré dans la mémoire 145 à l'instant t221.

## 5 - ACCES A L'HORLOGE DE DATATION ET SON REGISTRE

Un code approprié est appliqué à l'accès 5 sur la ligne 13 ; ce code agit par le multiplexeur de sortie 35 pour mettre en relation l'accès 4 soit avec l'horloge de datation 30 pour une certaine donnée émise sur la ligne 10, soit avec le registre de datation pour une autre donnée.

On remarquera que le nombre d'accès relativement réduit permet au dispositif de l'invention d'être réalisé en une seule puce (chip).

## Revendications

1. Dispositif d'analyse spectrale d'un signal numérique, caractérisé en ce qu'il comporte des accès de commande pour recevoir une information de méthode d'analyse destinée à commander au moins un circuit d'analyse.

2. Dispositif d'analyse spectrale selon la revendication 1, caractérisé en ce qu'il comporte un premier circuit d'analyse pour appliquer une première méthode sur le signal numérique et pour appliquer au moins une deuxième méthode en coopérant avec un deuxième circuit d'analyse.

3. Dispositif d'analyse spectrale selon la revendication 2, caractérisé en ce que la première méthode est une méthode de transformée de Fourier discrète tandis que la deuxième méthode est une méthode de coefficients de prédiction établis par le deuxième circuit d'analyse.

4. Dispositif d'analyse spectrale selon la revendication 3, caractérisé en ce que l'information de méthode peut comporter une sous-information de coefficient pour définir une méthode de détermination de coefficients à établir par le deuxième circuit d'analyse.

5. Dispositif d'analyse spectrale selon la revendication 4, caractérisé en ce que la méthode de détermination de coefficient est l'une et/ou l'autre des méthodes suivantes :
- méthode de Levinson,
- méthode du gradient.

6. Dispositif d'analyse spectrale selon l'une des revendications 1 à 5, caractérisé en ce qu'il comporte un ensemble de registres pour contenir l'information de méthode et les paramètres qui y sont associés.

7. Dispositif d'analyse spectrale selon l'une des revendications 2 à 6, caractérisé en ce que lesdits circuits d'analyse ont une structure de processeurs formés de mémoires adressables, d'unités de calculs et d'organes de séquencement.

8. Dispositif d'analyse spectrale selon l'une des revendications 1 à 7, caractérisé en ce qu'une corrélation du signal numérique est effectuée et en ce qu'une sortie est prévue pour fournir le coefficient R(0) de la corrélation.

9. Dispositif d'analyse selon l'une des revendications à 8, caractérisé en ce que l'analyse de spectre indique une opération du type :

$D(k) = \sqrt{DR(k)^2 + DI(k)^2}$

et en ce que le circuit d'analyse comporte des premiers moyens pour déterminer la valeur MAX de $|DR(k)|$

et de |DI(k)| et la valeur MIN de |DR(k)| et de |DI(k)| des deuxièmes moyens pour effectuer l'opération :
D(k) ~ MAX(|DR|,|DI|) + 3/8 MIN(|DR|,|DI|).

10. Dispositif d'analyse spectrale selon l'une des revendications 1 à 9, caractérisé en ce qu'il est réalisé en une seule puce.

11. Dispositif d'analyse spectrale selon l'une des revendications 1 à 10, caractérisé en ce qu'il comporte une horloge de datation accessible à l'utilisateur pour dater certaines données.

12. Dispositif d'analyse spectrale selon la revendication 11, caractérisé en ce qu'il comporte un registre pour stocker la date fournie par l'horloge de datation.

FIG. 1

EP 0 410 870 A1

FIG. 2

FIG. 3

FIG. 4

(61)

| | |
|---|---|
| X5 → 4 | X0 |
| X6 → 3 | X1 |
| 2 | X2 |
| 1 | X3 |
| 0 | X4 |

(63)

| | |
|---|---|
| 4 | R(4) |
| 3 | R(3) |
| 2 | R(2) |
| 1 | R(1) |
| 0 | R(0) |

FIG. 5

(61)

| | |
|---|---|
| 4 | 0 |
| 3 | 1 |
| 2 | 0 |
| 1 | 0 |
| 0 | 0 |

(62)

| | |
|---|---|
| 4 | 0 |
| 3 | 0 |
| 2 | 0 |
| 1 | 0 |
| 0 | 1 |

(63)

| | |
|---|---|
| 4 | R(4) |
| 3 | R(3) |
| 2 | R(2) |
| 1 | R(1) |
| 0 | R(0) |

FIG. 7

(61)

| | |
|---|---|
| X(n) → 5 | X(n-6) |
| X(n+1) → 4 | X(n-5) |
| 3 | X(n-4) |
| 2 | X(n-3) |
| 1 | X(n-2) |
| 0 | X(n-1) |

(62)

| | |
|---|---|
| 5 | a(5) |
| 4 | a(4) |
| 3 | a(3) |
| 2 | a(2) |
| 1 | a(1) |
| 0 | a(0) |

FIG. 11

FIG. 6

EP 0 410 870 A1

EP 0 410 870 A1

$\Phi$ DIV — $\Phi$ WL — $\Phi$ ACL — $\Phi$ KL

t15 — TH — t16 — t17 — t18 — t19 — t20 — t21 — t23 — t25

ADRX 1 $\{$ R / W $\}$ : 1 2 3 4 0

ADRX 2 $\{$ R / W $\}$ : 0 4 2 3 2 4 4 0 1

ADRR $\{$ R $\}$

(72) A : $-K.V$ | $P(0)$ | $P(4)$ | $P(3)$

(73) B : --- | $W(0)$ | $a(1)_2$ | $a(2)_2$ | $a(3)_2$ | $a(4)_2$

OPAL : $-A+B$

(75)

(70) : $-K$

(71) : $-V$ — $a(0)_1$ | $a(4)_1$ | $a(3)_1$ | $a(2)_1$

(76) : $W = \hat{R}(o)$ | $W'(1)$

FIG. 8

EP 0 410 870 A1

ΦACL | ΦKL | ΦDIV | ΦACL

t24 t25 t26 t27 t28 t29 t30 t31 t32

ADRX1 { R / W }
— 1 —

ADRX2 { R / W }
| 0 | 1 | 2 | 3 | 4 | | 0 |

ADRR { R }
— 2 — | 1 | 0 | 5 | 4 | 3 | — 3 —

(72) A
| PR(0) | PR(1) | PR(2) | PR(3) | PR(4) | V' |

(73) B
| PR(0) | S 01 | S 02 | S 03 | W' |

OPAL
| A | — A + B — |

(75)

(70) a
| R(2) | R(1) | R(0) | R(5) | R(4) |

(71) b
| a'(0) | a'(1) | a'(2) | a'(3) | a'(4) | | — V' — |

(76) W

FIG. 9

FIG.10

$\mu^{stg}$

INHB | 0 | 1 | 0 | 1 |

(74) | R(0)$^0$ | R(0)$^1$ | R(0)$^n$ |

DRC | 0 | 1 |

## FIG. 12

NR

MOT 3

1/N

MOT 4

LR

MOT 5

DF    OA    T

MOT 6

## FIG. 14

10 / 12

FIG.13

FIG. 15

EP 0 410 870 A1

FIG. 16

EP 0 410 870 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | MACHINE DESIGN, vol. 56, no. 27, novembre 1984, pages 109-113; R.J. VAN WOERT: "New instruments speed control system design" <br> * Page 110, colonne de gauche, alinéas 2-6; page 111, figure en haut * | 1,2,6,7 | G 01 R 23/16 <br> G 01 S 13/34 |
| Y | IDEM | 3 | |
| Y | IEEE TRANS. ON AEROSPACE & ELECTR. SYST., vol. AES-16, no. 4, juillet 1980, pages 517-525; J.P. TOOMEY: "High-resolution frequency measurement linear prediction" <br> * Page 517, colonne de droite, alinéas 1-3; table 1 * | 3 | |
| D,A | EP-A-0 251 387 (TRT & PHILIPS) <br> * Page 2, lignes 1-32; figure 1 <br> * & FR-A-2 600 778 | 1-3 | |
| A | IEE PROCEEDINGS-F, vol. 128, no. 5, octobre 1981, pages 331-336; A.E. CARR et al.: "Digital signal processing for target detection in FMCW radar" <br> * Page 333, colonne de droite, alinéa 6 - page 334, colonne de gauche, alinéa 1; figure 1 * | 5 | **DOMAINES TECHNIQUES RECHERCHES (Int. Cl.5)** <br><br> G 01 R <br> G 01 S |
| A | SIGNAL PROCESSING, vol. 10, no. 1, janvier 1986, pages 61-74; N. MARTIN: "An AR spectral analysis of non-stationary signals" <br> * Page 61, colonne de gauche, alinéa 1 - page 62, colonne de gauche, alinéa 1; page 62, colonne de droite, alinéas 1-4 * | 5 | |

Le présent rapport de recherche a été établi pour toutes les revendications

| Lieu de la recherche | Date d'achèvement de la recherche | Examinateur |
|---|---|---|
| La Haye | 23 octobre 90 | SINAPIUS G.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
 
& : membre de la même famille, document correspondant